# EUROPEAN PATENT SPECIFICATION

(11) **EP 1 917 862 B1**
(45) Date of publication and mention of the grant of the patent: **21.11.2018**
(21) Application number: 07118855.1
(22) Date of filing: 19.10.2007
(51) Int. Cl.: A23C 19/16, A23P 20/00

(54) **Coatings for food, in particular cheese**
Beschichtungen für Lebensmittel, insbesondere für Käse
Enrobages pour aliments, en particulier pour fromage

(30) Priority: 19.10.2006 EP 06122571
(43) Date of publication of application: 07.05.2008
(73) Proprietor: CSK Food Enrichment B.V., 8938 AS Leeuwarden (NL)
(72) Inventor: Koopmans, Wieger Jan, 8911 ET, Leeuwarden (NL); Meijer, Willem Cornelis, 6712 HA, Ede (NL); Kevelam, Jan, 6718 HR, Ede (NL)
(74) Representative: Nederlandsch Octrooibureau

(56) References cited:
- EP-A- 1 642 505
- EP-A1- 0 403 030
- WO-A-2005/067726
- WO-A2-2007/116020
- DD-A1- 137 398
- DD-A1- 142 839
- DE-A1- 2 554 473
- DE-A1- 10 356 779
- US-A1- 2002 068 810

## Description

### FIELD OF THE INVENTION

The present invention relates to a new composition for coating food and food ingredients, in particular cheese, and the use of such a composition.

### BACKGROUND OF THE INVENTION

For a controlled, so-called "natural" ripening and protection of hard and semi-hard cheeses, such as Dutch Gouda, the cheeses are usually treated with a coating dispersion which upon drying forms a film around the cheese. Such coatings protect the cheeses against physical, chemical and/or microbiological influences, by, amongst others,
- preventing the formation of cracks and other physical cheese defects during handling and ripening, thereby reducing the risk of moulding due to surface defects ("groen in de korst")
- preventing the growth of unwanted micro-organisms, in particular preventing unwanted cheese moulding (usually, for the latter reason, the coating is a carrier of fungicides such as natamycin)

In addition, cheese coatings have a certain permeability to gases such as oxygen gas and carbon dioxide gas, as well as to water vapour, so that they are employed to regulate the ripening of cheeses by controlling the exchange of water vapour and gases.

Finally, cheese coatings help to maintain the shape of cheeses and they have an important decorative function.

In most industrial practices, Gouda-type cheeses are usually coated using an automated coating machine comprising rotating brush-like rollers which are impregnated with coating dispersion. Using these types of machines, each coating treatment results in the application of a coating layer to the upper flat top of the cheese as well as on the side(s). After application of the dispersion to the cheese-rind a film is formed upon drying of the coating material. At certain well-defined time intervals after application, which in particular allow proper drying and film formation of the coating, the cheese is turned on the other side to coat the previously untreated flat part ("bottom") as well as the side(s). It is noted that only after this second (half-sided) treatment, the entire cheese is considered to be coated once (the sides have largely received two coating treatments). This process of coating and turning of the cheese is repeated several times during the ripening stage of a cheese to provide the protection as outlined above.

This coating process is continued until a certain desired ripening time of the cheese has been achieved. At this point in time, and after the lastly applied coating layer has sufficiently dried, the cheese may be sold to the retailers - in its entirety, cut up in pieces, diced, sliced, etc. However, in many cases it is desirable or even necessary to provide the coated, ripened cheese with a protective layer and subsequently cool the cheese down to below their ripening temperature, typically to below 7 °C. The term "protective layer" as used herein is considered to be a layer of materials which provide a largely impermeable barrier to oxygen gas, carbon dioxide gas and water vapour when properly applied. Such protective layers are applied to the cheese from the melt. Hereinafter, a material to provide such protective layers is indicated as a protective compound. A suitable example of a protective compound is paraffin. Typical conventional protective compounds are a blend of fully refined food grade paraffins and/or other hydrocarbon-based materials. After providing the cheeses with a protective layer, and following cooling, the cheeses may be stored without significant changes in taste and texture and without significant weight losses during storage. As to the latter aspect, it is noted that a protectively layer is largely impermeable to water vapour, whilst cheese coatings are permeable to water vapour to a certain extent.

Thus, whilst cheese coatings are regarded as ripening aids, a protective layer is mainly used to block further ripening of the cheese (at reduced temperatures). Protective layers are often applied to cheeses in order to achieve a certain storage buffer of cheese or to preserve the ripened cheese during transport, whilst essentially preserving taste, texture and weight of the cheese.

A frequently occurring problem is that the protective layer is locally disrupted from the coated cheese, resulting in the formation of so-called blisters between the cheese and the protective layer. This phenomenon is called blistering.

Blistering is unwanted in view of the following reasons:
- poor aesthetics; blisters look visually unattractive to the consumers
- blisters are prone to physical damage; enhanced fungal spoilage risks result with subsequent economical damage

Therefore, many attempts have been made to solve this problem.

It has been proposed to replace the conventional protective compounds, which are largely hydrocarbon composition, by mixtures comprising fatty acid glyceryl esters, as described, for example, in EP 0 403 030. Indeed, it is known that the use of Paradip Nowax® can retard blistering compared with materials for protective layers which are conventionally used, such as Paradip Yellow B®. Thus, blisters between the cheese coating and the protective layer of Nowax® occur less readily as compared to coated cheeses having a protective layer of conventional hydrocarbon-based materials. However, acetoglyceride-based protective layers have a higher permeability to water vapour resulting in weight loss of the cheese over time and are more expensive as compared with the conventional protective layers of mineral origin, making them economically less attractive in use compared to hydrocarbon-based materials for protective layers.

WO 2005/067726 describes the use of protective compounds comprising EVA, a copolymer of ethylene and vinyl acetate, to improve the adhesion of the protective layer to the cheese surface itself or to a coating layer which surrounds the cheese. However, in view of the surface activity of the ethylene-vinylacetate copolymer, the risk exists that EVA is preferentially adsorbed onto the (coated) cheese in the process of providing the cheese with a protective layer (which involves dipping the cheese in a bath of molten protective compound) resulting in composition drift of the EVA-formulated protective compound. Therefore, the physico-chemical properties of melts of EVA-containing protective compounds are not constant in time, and timely replenishment of the bath containing molten protective compound with additional EVA may be necessary, depending on the number of cheeses which have been treated in the same bath.

Also, the EVA-based additives function as "hotmelt glue" components in the protective compound, which not only improve adhesion of the protective layer to the cheese, but enhance stickiness of the protective compound to any surface on which the protective compound is applied. As a consequence, the working place and machineries for applying the protective layer are more difficult to clean since spilled protective compound is less easy to remove than protective compound without the EVA additives.

Similar cheese coatings containing EVA have been described in WO 2005/067726, DD 142839, EP 0403030 and DE 2554473.

EP 1 642 505 teaches the use of certain hydrophilic polymers such as caseins, modified starches and cellulose ether derivatives to reduce blistering. Although the additives described in this document are effective to achieve the desired effect, the invention is associated with the disadvantage of reduced drying rates of the coating. It is known that hydrophilic polymers have the tendency to increase the open time of polymer dispersions. Effectively, the film formation process is hereby retarded.

This may have important practical consequences in critical situations. Under conditions of occasional lower ripening temperatures (than set on the controller, or than desirable) or and/or under conditions of occasionally or locally enhanced relative humidity, the drying time of the lastly applied coating layer may be too long in order to allow complete film formation prior to turning the cheese, as performed at a well defined time interval according to the usual factory protocol. If this happens, the cheese will be lying on the shelf with a non-dried, tacky coating layer facing the shelf. Thus, the presence of added hydrophilic polymers may lead to enhanced risk for the coated cheeses to be "glued" to the shelves, with disadvantageous economic consequences.

Non pre-published document WO 2007/116020 describes a coating composition comprising a copolymer of vinyl acetate and dibutyl maleate or a poly acrylate which comprises a wax for coating food products. The resulting coating is non-blocking (non-sticky) and peelable.

Therefore, there is still room for improvement, in particular in providing solutions to reduce the blistering problem, employing universally applicable cheese coatings having convenient drying rates which can be formulated on the basis of conventional base dispersions for cheese coatings, and onto which - after forming a dry film - traditional protective layers of hydrocarbon composition can be applied which are preferred for cost, stability and permeability reasons.

### SUMMARY OF THE INVENTION

It is an object of the present invention to provide cheese coating compositions which reduce the problem of blistering of protective layers, particularly those protective layers composed of mineral origin, as compared to the coating dispersions hitherto known.

It is also an object of the present invention to provide compositions that are food-grade and it is also an object of the present invention to provide compositions that do not adversely influence the overall properties of the dried film on cheese, or on the drying process of the film.

It is another object of the present invention that such compositions are obtained by employing coating additives which can be admixed to base dispersions for cheese coatings.

It is also an object of the present invention to provide coating compositions that can be produced by methods which fit into existing production processes of formulated cheese coatings. Preferably, for preparing the coating compositions of the current invention, existing production processes can be used without needing major adaptations, such as investments in mixing systems, etc.

Surprisingly, it has now been found that these objectives are met by using certain wax particles as additives for cheese coating compositions. Preferably, wax emulsions are used as additives for cheese coating compositions.

More in particular, the present invention provides a water-borne cheese coating for reducing blistering of a protective layer, the composition comprising
- a water-borne polymer dispersion, and/or a film-forming component which comprises biopolymers, and
- a wax additive, wherein the wax additive comprises wax particles which are solid at room temperature,
wherein the concentration of the wax additive ranges between 0.1 and 5%, based on dry matter and wherein the cheese coating composition comprises a colourant.

It has been found that the incorporation of wax particles, such as wax emulsions, into cheese coating compositions significantly reduces blistering of a protective layer. Interestingly, the incorporation of such additives into cheese coating compositions does not notably enhance the drying time of cheese coatings which contain such wax particles. In general, cheese coatings formulated using wax particles, preferably cheese coatings comprising wax emulsions, are not prone to enhance tackiness under critical conditions of low temperature or high relative humidity. On the contrary, it appeared that during the ripening stage of the cheese, the addition of wax emulsions to the cheese coating reduced the tendency of the coated cheese to stick to the wooden shelves upon which they reside during ripening.

Thus as an additional advantage it surprisingly has been found that the present coating compositions provide an additional benefit of reducing the tendency of the coated cheese to adhere to the shelves.

### DETAILED DESCRIPTION OF THE INVENTION

The present invention concerns in one embodiment cheese coating compositions, in particular for reducing blistering of a protective layer, comprising a water-borne polymer dispersion, and/or a film-forming component which comprises biopolymers, and a wax additive, wherein the wax additive comprises wax particles which are solid at room temperature. The cheese coating composition according to the present invention is by definition a water-borne cheese coating composition. Preferably the wax particles are wax emulsions.

Such wax additives can conveniently be employed as additives for commonly used and commercially available cheese coatings.

Wax emulsions are commonly employed as additives for water-borne coating systems for non-food applications. The mix of emulsion and coating results in a substrate having a lower coefficient and friction, improved rub resistance, barrier properties, better release, better machinability, and the like.

Wax emulsions comprise finely dispersed wax particles in an aqueous medium, prepared by emulsification of molten wax particles in an aqueous medium, followed by cooling down to temperatures at which the wax is a solid. The average diameter of the wax particles is typically less than one micrometer. The particles are commonly stabilised using low molecular weight surfactants, although the use of polymeric stabilisers and/or proteinaceous stabilisers is also known.

CA 655011 describes blends of polyvinylacetate (co)polymer emulsions with wax emulsions of a solid, non-tacky wax, for application on a flexible fibrous base such as paper and textiles. The addition of wax emulsions results in the achievements of the following desiderata:
- a flexible coating free from cracking, sticking or blocking
- a coating having grease and moisture resistant properties
- a coating which will gloss up upon calendaring

It is clear that this prior art does not anticipate the surprising effect of enhanced adhesion properties of a conventional protective layer, comprising paraffinic and/or other hydrocarbon-based protective compounds, which is applied from the melt on a coated cheese, with the cheese coating containing the wax emulsion additive.

WO 2006/056561 describes peelable coatings which are obtained by adding paraffin, wax, and/or polymer resin with barrier properties, such as poly(tetrafluoro-ethylene), to a water-borne polymer dispersion. In one embodiment, a cheese coating composition is prepared containing a polyethylene wax emulsion. The addition of the wax emulsion to the coating composition contributes to the ease of removal of the dried coating film from the cheese.

Contrary to the objective of the present invention to improve protective layer adhesion, WO 2006/056561 discloses compositions which improve peelability (i.e. *promote release*) from a substrate.

According to the present invention the wax employed for preparing the wax additive is a low-melting-point organic material or compound that is solid at room temperature. Waxes have a melting point which is above room temperature; typically, the melting point of waxes is 40 °C or higher, without decomposing, which distinguishes waxes from oils and from natural resins, and they have a relatively low viscosity at temperatures slightly above the melting point; non-stringing but producing droplets, which exclude most resins and plastics.

Preferably, the wax employed for preparing the wax additive at least partially melts when coming into contact with the hot composition providing the protective layer as the latter is usually applied from the melt onto the dried coating comprising the wax additive. Since hot compositions providing the protective layer, as applied from the molten state, are typically in the temperature range of 75-125 °C, the melting point of the wax employed for preparing the wax additive which is to be used according to the present invention is preferably below 125 °C. More preferably, the melting point of the wax employed for preparing the wax additive is below 110 °C. Even more preferably, the melting point of the wax employed for preparing the wax additive is below 100 °C. It is even more preferred that the melting point of the wax employed for preparing the wax additive is below 95 °C. Most preferably, the melting point of the wax employed for preparing the wax additive which is to be used according to the current invention is below 90 °C.

Herein, "the melting point of the wax employed for preparing the wax additive" is conveniently determined using differential scanning calorimetry. When appropriate, the wax additive is worked up before the analysis procedure using commonly known separation techniques.

It is particularly advantageous that certain further aspects are considered in order for the protective layer to adhere even better to the dried coating.

In order to improve the adhesion between the protective layer and the dried coating containing the wax particles, it is preferred that the surface tension of the protective layer is lower than the surface tension of the wax particles.

In other words, preferably, the surface tension of the wax employed for preparing the wax emulsion is higher than the surface tension of the protective layer.

Preferably, the surface tension of the wax employed for preparing the wax emulsion is higher than 20 mN/m (at 20 °C). Even more preferably, the surface tension of the wax employed for preparing the wax emulsion is higher than 25 mN/m (at 20 °C). It is even further preferred that the surface tension of the wax employed for preparing the wax emulsion is higher than 30 mN/m (at 20 °C). Most preferably, the surface tension of the wax employed for preparing the wax emulsion is higher than 40 mN/m (at 20 °C).

These values refer to the "true" values of the surface tension of the wax itself, as employed for preparing the wax additive, without other (surface-active) components which could be part of the wax additive. Since surface tensions are actually difficult to determine due to the presence of surface active agents, it is preferred to look for a well-established tabulated value of the surface tension for such a compound, and compare this value with the preferred ranges indicated herein. A preferred source is J. Brandrup and E.H. Immergut, Polymer Handbook, 3rd Edition, p. VI/411-VI/434 and references therein. Another preferred source is the internet paper by E.M. Petrie "Abhesion or "Anti-Adhesion"", dated March 24, 2004, as published on the website www.specialchem4adhesives.com.

In one embodiment, Michem Emulsion 37135, a polyethylene wax emulsion from Michelman Inc., Ohio USA, is preferably not used to prepare the coating compositions according to the current invention.

Waxes can be divided into synthetic (produced by polymerization), refined (from fossil fuels) and natural. Starting materials for wax emulsions include paraffin and microcrystalline waxes, polyethylene and polypropylene waxes, amide waxes, carnauba waxes, candelilla wax, beeswax, montan waxes and Fischer-Tropsch waxes.

It is desirable that the wax additives for preparing the cheese coating compositions according to the present invention contain food grade waxes. Such food grade waxes may be selected from a number of natural waxes such as beeswax, carnauba wax and candelilla wax as well as from a range of fully refined hydrocarbon waxes, including microcrystalline and paraffin waxes. In addition, montan wax may be employed. Also wax materials based on mono-, di- and/or triglycerides of fatty acids, and mixtures thereof, may be employed; such materials are optionally partially acetylated. Such compounds comprise the waxes based on highly hydrogenated oils as described in WO 2004/0883310. Hydrogenated natural oils and/or fats may also be employed, including hydrogenated ricinus oil. Food grade synthetic waxes include oxidised polyethylene wax. Preferred food grade waxes are paraffin wax, microcrystalline wax, montan wax, carnauba wax and candelilla wax. Food grade waxes may optionally contain shellac. In one embodiment, the paraffin wax employed for preparing the wax additive has a melting point of 90 °C or lower.

For application in The Netherlands, it is preferred that the water-borne cheese coating compositions of the current invention comply with the requirements as laid down in the Warenwetregeling Kaaskorstbedekkingsmiddelen (Regeling van de Staatssecretaris van Volksgezondheid, Welzijn en Sport van 2 februari 1996), which is incorporated by reference herein.

Mixtures of waxes may be used to prepare the wax additives mentioned above. In addition, mixtures of wax additives (of any composition) may be used for preparing the cheese coating compositions according to the present invention. The wax additives of the present invention may optionally contain polymers such as polyethylene, polyisobutene or butyl rubber.

Thus, preferred wax additives according to the invention are wax particles based on food grade waxes. Even more preferred wax additives according to the present invention are wax emulsions based on food grade waxes.

For the production of wax emulsions, emulsifiers are commonly employed. If emulsifiers are to be employed for this purpose, non-ionic surface-active compounds are preferred. Cationic surfactants in general do not have the desired food grade status, and anionic surfactants may have specific interactions with the polyvinyl alcohol present in the cheese coatings, resulting in unwanted and uncontrolled thickening of the formulated cheese coating product, depending on the concentration of emulsifier in the wax emulsion and on the concentration of wax emulsion in the coating system.

Alternatively, it can be preferable not to use emulsifiers at all for the production of wax emulsions for the purpose of this invention. This is the case for so-called self-emulsifying waxes. For example, montan wax is capable to form self-emulsifying wax emulsions. Indeed, montan wax emulsions are preferably used for preparing the compositions of the present invention. The use of self-emulsifying wax emulsions as apposed to emulsifier-containing is generally advantageous, since the addition of excess emulsifiers to a coating system in general poses enhanced risks of poor recoatability of the dried coating film.

In all cases, and particularly in case of self-emulsifying wax additives, the wax additives are preferably chosen to be physically and chemically stable in the pH-range which is preferable for cheese coatings. More generally, the wax particles are preferably compatible with aqueous polyvinyl alcohol-stabilised dispersions of vinylacetate-containing (co)polymers in the pH range between 3.0 and 8.0, more preferably in the pH range between 4.0 and 7.0.

In addition, the wax additives after mixing into the coating dispersion, do not notably phase-separate from the formulated coating system. That is, visually occurring creaming or sedimentation of the wax additive in the coating system preferably should be prevented, preferably up to storage times of the coatings of for example at least 1 month, preferably of at least 6 months. In other words, the formulated coating system preferably should remain physically stable during storage for at least 1 month after production, preferably for at least 6 months after production. It is clear to the person skilled in the art which factors are responsible for these phase separation phenomena, including appreciable differences in density between the coating and the wax particles, or wax particle sizes exceeding a certain critical magnitude. It is also clear to the person skilled in the art which measures should be taken in case insufficient physical stability is (still) a problem. In such instances, small amounts of rheology modifiers may be added to solve the problem. These rheology modifiers are preferably of food grade. Particularly certain gums may be effective, comprising xanthan gum or carrageenan. Also certain types of polyvinyl alcohol or cellulose ethers may preferably be employed.

The larger the wax particles, the more the optical properties of coating films are influenced, depending on the concentration of the wax additive. In order not to negatively influence gloss and transparency of the dried coating film, it is preferred that the average size of wax particles remains in the sub-micron range. Since high gloss and transparency are generally desired for cheese coatings, in view of their favourable small average particle size and in view of ease of incorporation into the coating system, wax emulsions are preferred over wax particles which are, on average, significantly larger than 1 µm, such as certain wax powders or micronised waxes. Of course, in the cases that gloss and/or transparency are not required, wax additives of larger particle size can be added to cheese coatings so as to reduce the blistering problem. Examples of coatings which do not require high gloss and/or transparency are white coatings for goat cheese, or other specialty coatings with particular desired optical properties. Still, in view of the physical stability of coating compositions comprising wax particles, the upper limit to the average size of the wax particles to be employed according to the current invention preferably does not exceed 500 micrometers. More preferably, the upper limit to the average size of the wax particles to be employed according to the current invention preferably does not exceed 100 micrometers. Even more preferably, the upper limit to the average size of the wax particles to be employed according to the current invention preferably does not exceed 10 micrometers.

If water-borne wax additives are employed, such as wax emulsions, it is preferred that the solid matter content of such water-borne additives is over 5% (w/w). A certain minimal solid matter content is necessary to allow sufficient formulation space in preparing the final formulated product. The upper limit of the solid matter content is dictated by the rheological profile of the water-borne wax additive. The viscosity of a water-borne additive should not exceed 100 Pa.s. Needless to say, solid wax additives may contain up to 100% wax solids.

Traditionally, the main film-forming properties of protective cheese coatings are determined by the nature and composition of the water-borne base dispersions of synthetic copolymers which comprise the water-borne cheese coating composition. Such base dispersions comprise copolymers of vinyl acetate, such as poly(vinyl acetate-co-din-butylmaleinate) or poly(vinyl acetate-co-ethylene). Such dispersions may also comprise acrylic copolymers. In addition, homopolymers of vinylic or acrylic monomers may be present in such base dispersions. In view of availability, vinyl acetate homo- and copolymers are preferred. It is understood that herein the term "copolymer" is not restricted to a polymer being composed of only two different monomers. Instead, such polymers may contain more than two different monomers. The solid matter content of base dispersions for cheese coatings generally ranges between 40 and 60%. The stabilisation system of the polymer dispersion is comprised by surfactants and/or by (combinations of partially hydrolyzed) polyvinyl alcohol, optionally of different molecular weights. In view of the viscosity requirements of the rotating brush coating process, which is typical and preferred for the treatment of Gouda cheeses, stabilisation systems comprising largely polyvinyl alcohol are preferred. One particular and preferred example of a base dispersion comprising poly(vinyl acetate-co-di-n-butylmaleinate) which is largely polyvinyl alcohol-stabilised is Mowilith® SDM 4230 KL (solid matter content 45%), manufactured by Celanese Emulsions GmbH, Frankfurt am Main, Germany.

Whilst base polymer dispersions are typically produced by the chemical industry, they are commonly formulated to dairy products. The formulation of cheese coatings involves the mixing of the base dispersions with other base dispersions and/or with certain ingredients. One such ingredient is water, which is commonly added to adapt the viscosity and the solid matter content of the coating.

The viscosity of the coating is important with regard to the dosage settings of the cheese coating machines (e.g. those of the PLASTIMA® range manufactured by Doeschot, Alkmaar, the Netherlands), and for the rotating brush treatment of Gouda-type cheeses and should typically range between 20 and 80 Poise. A lower viscosity would result in unacceptable losses of coating due to run off from the machine and from the cheese, as well as in cleaning problems of the machine.

The solid matter content of ready-to-use cheese coatings is selected to provide a certain thickness ("protective power") and to limit the drying time of the coating to acceptable levels; the upper limit to the solid matter content of such coatings is determined by commercial reasons as well as the choice of the stabilisation system and its influence on the concentration-dependent rheological properties of the coating dispersion. The solid matter content of a formulated, ready-to-use polyvinyl alcohol-stabilised cheese coating preferably ranges between 30 and 50 wt%, more preferably between 35 and 45 wt%.

Besides water, the coating manufacturer optionally provides the coating with other ingredients such as natamycin (a polyene fungicide), inter alia supplied by DSM Food Specialties, Delft, The Netherlands, and/or a food grade dye, e.g. annatto. Optionally, preservatives such as sorbic acid or its potassium or sodium salts may be added. One particular example of a (range of) ready-for-use commercially available cheese coating includes (the coating range with trade name) CeskaCoAt WL® (CSK Food Enrichment BV, Leeuwarden, the Netherlands), hereinafter referred to as CESKA WL®.

Regarding the protective layer, traditionally, hydrocarbon-based or paraffinic protective compounds are used in view of their excellent barrier properties (see above) and ready availability at prices which are lower than the relatively recent acetoglyceride-containing protective compounds such as Nowax®.

Whilst these types of conventional hydrocarbon-based protective compounds are most commonly employed, they also suffer from the most severe "blistering" problems already mentioned above.

Typically, conventional protective compounds are a blend of fully refined food grade paraffins and/or other hydrocarbon-based materials. Preferably, the protective compound comprises at least 50% (w/w) refined hydrocarbon-based materials. In general the protective compound can be a blend of formulated linear and branched hydrocarbon materials and optionally contains small amounts of polymers such as polyethylene, polyisobutene or butyl rubber. The protective compounds such obtained are solid at room temperature. The formulation is chosen for the optimal desired protection as well as cost. A variety of cheeses are produced all over the world ranging from soft to hard and from old to young cheeses. Therefore a broad range of hydrocarbon-based protective compounds is available nowadays for cheeses. The coloured grade protective compounds may also contain food grade colour pigments or dyes.

The protective compound is melted before use and can be applied directly to the cheese surface, to cheese rind or to a bandaged surface of suitable integrity. Individual cheeses are immersed in molten protective compound for pre-set times, or sprayed or showered with molten protective compound for pre-set times.

Protective layer thickness can be increased by using several immersions but can also be regulated by varying the temperature of the molten protective compound or by selection of a suitable mixture of protective compounds such as paraffins.

Application of the protective compound can be manual, semi-automatic or automatic depending on the number of cheeses to be treated. Specialised machines for applying molten protective compounds to cheeses are commercially available. Molten protective compounds used are typically in the temperature range of 75-125 °C. Typically, the congealing point (measured according to ASTM 938) of the protective compound will be between 45 and 80 °C, preferably between 50 and 70 °C. Typically, the molten protective compound will have a viscosity, which when applied onto cheese, allows a uniform coating to take place. The viscosity should not be too low; otherwise the protective layer will be too thin. However, a high viscosity may result in too thick a coating or nonuniform protective layers.

Paradip Yellow B® is an example of a conventional protective compound which is commercially available from Paramelt Syntac BV, and which is preferably used for the treatment of Gouda-type cheeses, at temperatures around 100 °C.

Preferably, the wax additive is added to the cheese coating at a concentration of 0.1 - 5% or at a concentration of 0.5 - 5% (wax solids by weight / coating solids by weight). Whereas concentrations of the wax additive as low as 0.5% by weight still significantly reduce blistering of a protective layer, the effect on blistering becomes smaller as the concentration of the wax additive is reduced. For reducing blistering of a protective layer on a coated young Gouda cheese, it is preferred that the cheese coating composition comprises a minimum amount of 0.1% by weight of the wax additive. It is also preferred that the concentration of the wax additive does not exceed 5% (wax solids by weight / coating solids by weight), otherwise the cheese coating composition may dry up on the cheese to form an opaque film, which is generally less preferred by consumers. Moreover, if the wax additive is chosen as a wax emulsion, a further advantage of keeping the concentration of the wax emulsion in the coating composition below 5% (wax solids by weight / coating solids by weight) is that the viscosity of the coating remains sufficiently stable in time, especially in that a significant viscosity build-up in the coating composition may be prevented.

In a particularly preferred embodiment, the wax additive is present in the water-borne cheese coating composition at a concentration ranging between 0.1-1.5% or 0.5-1.5% by weight, based on dry matter (that is, expressed as wax solids by weight / coating solids by weight). At concentrations of the wax additive below 1.5%, the adhesion of the water-borne coating composition to the cheese, after application and drying thereto, is not noticeably affected by the presence of the wax additive. This is particularly advantageous for applications such as cutting or slicing of the cheese, so as to prevent fragments of the dried coating composition to come off the cheese during cutting or slicing.

Thus, the present invention also concerns a water-borne cheese coating composition comprising a water-borne polymer dispersion and a wax additive in an amount of 0.1-1.5%, preferably of 0.5-1.5% by weight based on dry matter, wherein the wax additive comprises wax particles which are solid at room temperature - thus, to compositions suitable for coating cheese having general 10 applicability, which is particularly suited for, but not limited to, reducing blistering.

In one embodiment, the water-borne polymer dispersion comprises or consists of a homo- or copolymer of vinyl acetate. In another embodiment, the water-borne polymer dispersion comprises or consists of a homo- or copolymer of a (meth)acrylate.

Preferred base dispersions for the improved coating composition according to the invention to which the wax additives are added include aqueous dispersions of copolymers of vinylic and maleic esters having side chains composed of saturated hydrocarbons. A suitable vinylic ester of a saturated hydrocarbon for use in the copolymer which forms part of the coating composition of the invention is vinyl acetate. Suitable maleic esters for use in the copolymer component of the coating composition according to the invention are, for example, dibutyl maleinate and di-2-ethylhexyl maleinate, of which dibutyl maleinate is most preferred.

A suitable and preferred protective colloid for use in the coating composition is polyvinyl alcohol.

Thus, in one embodiment, the water-borne polymer dispersion comprises or consists of a copolymer of vinyl acetate and a maleic ester, wherein the maleic ester is preferably selected from the group consisting of dibutyl maleinate and di-2-ethylhexylmaleinate. Herein, the expression "copolymer" refers to any polymer which has been made up of more than one type of monomer. For example, a copolymer may comprise two, three, or more different monomers. However, a polymer made up of one single monomer is not a copolymer.

In one embodiment, a water-borne cheese coating composition is provided, the composition comprising
- a water-borne polymer dispersion, and
- a wax additive, wherein the wax additive comprises wax particles which are solid at room temperature,
wherein the concentration of the wax additive ranges between 0.1 and 5%, based on dry matter and wherein the cheese coating composition comprises a colourant.

According to this embodiment, preferably, the water-borne cheese coating composition does not comprise a film-forming component which comprises biopolymers. Advantageously, a water-borne cheese coating composition which is essentially free of biopolymers is less prone to microbiological degradation.

Notwithstanding the fact that the abovementioned base dispersions, of which the polymer source is derived from petrochemical feedstock, are preferably used for the improved coating composition as defined herein, we note that also cheese coatings based on film-forming biopolymers may be used in the current invention. Such coatings comprise biopolyesters such as poly(hydroxyalkanoate)s, cellulose ethers or proteins, comprising caseinates, whey proteins, soy proteins and cellulose ethers, and the like.

Thus, in one embodiment, the film-forming component which comprises biopolymers is selected from the group consisting of biopolyesters, cellulose ethers and proteins. A preferred biopolyester is a poly(hydroxyalkanoate). A preferred cellulose ether is carboxymethylcellulose, or hydroxyethylcellulose. A preferred protein is a whey protein, preferably from whey protein isolate.

In a preferred embodiment of the present invention the water-borne cheese coating compositions may further contain preservatives (such as sorbic acid or its alkali metal salts), fungicides (for instance of the polyene type, such as natamycin) and the like, so as to produce tailor made, ready-to-use cheese coating formulations. Typical concentrations of natamycin range between 10 and 1500 ppm, more preferably between 50 and 250 ppm. Sorbic acid or its alkali salt are typically employed at concentrations between 500 and 15,000 ppm. Preferably, additional water is added to the base dispersion in concentrations between 1 and 20 wt%. The additive of the present invention is optionally dispersed in this water phase.

In one embodiment, the water-borne cheese coating composition has a solid matter content of between 20 and 80% by weight, more preferably between 30 and 60% by weight, most preferably between 35 and 45% by weight. The latter range provides for an optimal balance between drying time and application viscosity, especially if the water-borne coating composition comprises a water-borne polymer dispersion which is stabilised by a protective colloid, preferably polyvinyl alcohol, and if the water-borne coating composition is further essentially free of, or contains no more than 5% by weight, based on dry matter, of the water-borne film-forming component which comprises biopolymers. Accordingly, a water-borne cheese coating composition is provided which provides for an optimal balance of application viscosity and drying time.

The coating compositions according to the present invention provide an excellent coating on cheese, in particular hard and semi-hard cheeses, and they effectively solve the blistering problem without the known disadvantages of the solutions of the prior art.

The water vapour permeability of the cheese coating compositions according to the present invention can be influenced by varying the concentration of the wax particles in the coating. For instance, when using wax emulsions for preparing the compositions according to the present invention, it appeared that in order to significantly reduce evaporative drying loss of cheese during ripening, the wax concentration in the coating has to exceed 5% (wax solids by weight / coating solids by weight) in order for the percentage of weight loss of the cheese to be reduced to at least 1 percent point, as compared with the percentage of weight loss of the cheese, at a time of 28 days after production.

The pH of the composition is suitably in the range of 3.5-8.0. However, a pH of 5 or lower and in particular of about 4.8 is generally preferred, since the storage life of the composition is thereby increased. Such a pH can be advantageously adjusted by the addition of a suitable acid, for example hydrochloric acid and/or acetic acid, or the use of a suitable buffer solution.

The coating composition according to the invention preferably has a viscosity (Brookfield LVT, sp. 4, RT) of 10-300 Poise (or 1-30 Pa.s), most preferably 20-100 Poise (or 2-10 Pa.s). The dry solids content generally is in the range of 30-60%, and most preferably of 35-50%.

The ready-for-use compositions can be suitably stored for a longer period of time, from several days up to at least 6 months, at a temperature of 4-20 °C, before it is used.

The coating composition according to the invention is generally applied to the desired product at a temperature of between 10-30 °C, and the product is then dried. In general, the composition can be applied at any suitable point in time, as is the case now with state of the art compositions. The application may occur manually or mechanically in a way which is well known to a person skilled in the art. Drying generally occurs in the air, but may also be accelerated, if desired. Optionally an after-treatment of the product may take place, for example to reinforce its mechanical properties or to embellish its appearance. These steps are all known as such and will therefore not be discussed in detail.

The invention further relates to the use of a cheese coating composition comprising
- a water-borne polymer dispersion, and/or a film-forming component which comprises biopolymers, and
- a wax additive, wherein the wax additive comprises wax particles which are solid at room temperature,
for reducing blistering of a protective layer. Herein, the concentration of the wax additive in the water-borne cheese coating composition ranges preferably ranges between 0.5 and 5% by weight, based on dry matter.

The invention further relates to the use of a coating composition according to the present invention, as described above, in the manufacturing or rather conservation of cheese, both on semi-hard and hard cheese, such as Gouda cheese, Maasdam cheese, Edam cheese, Emmental cheese, Gruyere cheese, Parmesan cheese and Cheddar cheese, and can also be used on soft cheese, such as most French cheese and 'smear' cheese. The cheese on which the composition according to the invention is applied may be of any source, for example cheese made from cow milk, goat milk, sheep milk, etc., or mixtures thereof.

The present invention relates also to cheese per se, when coated with a coating composition as defined above.

The present invention also relates to such coated cheeses which are provided with a protective layer.

Furthermore, the present invention relates to a method for preparing a cheese with a coating for reducing blistering of a protective layer, in which a coating composition as defined above is applied onto said cheese.

In addition, the present invention relates to a method for preparing a cheese with a coating for reducing blistering of a protective layer, in which a coating composition as defined above is applied onto said cheese, further comprising the step of applying a protective layer onto said coated cheese.

The invention is further illustrated by the following example which is not to be construed as limiting the invention in any respect. The percentages in this specification are percentages by weight, unless stated otherwise.

### EXAMPLE

Commercially available cheese coatings based upon vinyl acetate - dibutyl maleinate copolymers have been obtained from CSK Food Enrichment BV, Leeuwarden, the Netherlands. A typical product code is CesKa-coAt WL xxx.yy.zz, wherein xxx relates to the content of natamycin in ppm; yy relates to the concentration of a yellow dye, Annatto, and zz is the Brookfield viscosity (determined at room temperature using a Brookfield LVT viscosimeter, spindle 4). The pH of such coatings ranges between 4.5 and 5.5.

As a reference coating, Ceska WL 500.02.45 was used. To illustrate the ease of preparation of the compositions of the inventions, the compositions exemplifying the present invention were prepared by admixing the desired amounts of wax emulsion to a certain amount of Ceska WL 500.02.85 and adjusting the viscosity of the resulting product to the specified viscosity of the reference product by adding some additional water. Then the coating compositions were formulated to the desired specification by weighing the desired amounts of wax emulsion and additional water into the Ceska WL 500.02.85 cheese coating product to obtain the desired coating composition exemplifying the current embodiment.

Since natamycin is present in more than sufficient quantities to prevent growth of yeasts and fungi, the lowering of the natamycin content in the coating compositions of the invention caused by dilution of the natamycin content of the reference coating does not practically influence the antimicrobial protective power of the coating. In addition, the additives such as natamycin and colorants are present in such low quantities that they do not significantly influence the coating properties in practice.

Therefore, in effect, the improved coating properties of the compositions exemplifying the coating compositions of the invention, in comparison with the coating properties of the reference coating, are solely caused by the wax additives.

In this example, two different wax emulsions, Wax Emulsion M and Wax Emulsion C, are each individually dosed into a quantity of Ceska WL 500.02.85 base dispersion together with an additional amount of water ranging between 0% and 5% to obtain a concentration of 2% of the wax additive in the final coating composition (percentages indicated as weight amount of wax emulsion or water per weight amount of Ceska WL 500.02.85 coating dispersion).

Wax Emulsion M is a self-emulsifying wax emulsion based on montan wax. The solids content of the wax emulsion is 20%.

Suitable food grade self-emulsifying wax emulsions based on montan wax can be directly prepared from Licowax KPS (ex Clariant, Augsburg, Germany).

Wax emulsion C is based on carnauba wax, containing non-ionic emulsifiers. The solids content of the emulsion is 30%.

A suitable food grade carnauba wax emulsion, stabilised by non-ionic emulsifiers, is commercially obtainable, for example as Carbin® Acqua FG 335 nonionic carnauba wax emulsion (ex Tropical Ceras Do Brasil LTDA, Parnaiba - Piauí, Brasil).

A Dutch cheese, type Gouda, produced by Frico Cheese, having a fat content in the solid matter content of 48% and a nominal weight of 4.5 kg, is taken out of the brine bath and coated according to a coating protocol which is generally as follows.

Approximately 3 to 4 days after production, within a few hours after coming out of the brine, the cheeses are placed on wooden shelves, and by manual application (using a sponge) receive a thin coating layer on the top half of the cheese as well as on the sides. The amount of coating which is applied in one run ranges (on average) between 5 and 10 g (total weight basis). The coating is allowed to dry for between one to three days, the cheeses are turned on the shelves and the procedure is repeated until the cheeses reach an age of 29 days after production. More precisely, the coating scheme actually employed was as follows (turning of the cheese followed by half-side coating of the cheese): at 4, 7, 10, 13, 15, 17, 19, 22, 25 days after production. The storage conditions are controlled at a temperature of 13 +/- 1 °C and at a relative humidity of 85 +/- 3%.

Table 1.1 summarises the characteristics of the thus obtained compositions.

**Table 1.1 Characterisation of the coating compositions used**

| **Coating** | **Viscosity (Poise)^{a}** | **Solid matter content^{b}** | **Wax additive** | **Wax concentration in coating^{c}** |
|---|---|---|---|---|
| Reference | 45 | 41.0% | - | 0% |
| Coating 1.1 | 45 | 41.4% | Montan wax | 0,97% |
| Coating 1.2 | 45 | 41.6% | Carnauba wax | 1,44% |
| | | | | |
| a) Brookfield viscosity determined according to ISO 2555; Brookfield viscosimeter LVT spindle 4, 30 rpm, 23 °C. The error margin in the determination is approximately 5 Poise. NB: According to S.I., 1 Poise equals 0.1 Pa.s | | | | |
| b) Total solids according to ISO 1625. The error margin is 1 percentile (i.e. 1 percent point) | | | | |
| c) Expressed as wax solids by weight / coating solids by weight. To illustrate the calculation, the wax concentration in Coating 1.1 was calculated as follows. The solid matter content of the coating is 41.4%. The concentration of the wax additive (Wax emulsion M) in the total coating formulation is 2%. The solids content of the wax additive (Wax Emulsion M) is 20%. The solid matter content of the wax in the coating it 0.4%. The wax concentration in the coating is (0.4%/41.4%)* 100% = 0,97% (wax solids by weight / coating solids by weight). | | | | |

Selected important cheese coating properties (gloss, transparency and anti-blocking) were determined at a cheese age of 15 days after production (see Table 1.2).

When the cheeses reached an age of 28 days after brining (the drying time after the last coating treatment before application of a protective layer was 72 hrs), a protective layer of Paradip Yellow B1® (ex Paramelt, The Netherlands) was applied by a quick immersion of coated cheeses in the molten protective compound having a temperature of 100 °C. The cheeses were subsequently cooled down in a cold storage room which was held between 4 °C and 7 °C during the storage time of the cheeses.

The extent of blistering was determined at 100 days after applying the protective layer to the cheese. The blistering score was obtained by judging the number and size of blisters between the coating and the protective layer. This parameter was scored by a panel of experienced cheese manufacturers. Cheeses coated with coating 1.1 received a blistering score of "good", whilst the reference cheeses received a blistering score of "average", meaning that the cheeses coated with coating 1.1 have significantly less and/or smaller blisters than the reference cheeses, at 100 days after applying the protective layer. Table 1.2 summarises the results.

**Table 1.2 Comparison of cheese coating properties in the presence and absence of wax additives**

| **Coating** | **Gloss and Transparency^{a}** | **Blocking^{b}** | **Blistering score** |
|---|---|---|---|
| Reference | Good | Good | Average |
| Coating 1.1 | Good | Excellent | Good |
| Coating 1.2 | Good | Excellent | Good |
| | | | |
| a) Gloss and transparency are visually observed and evaluated by a panel of experienced cheese manufacturers | | | |
| b) Blocking ("kleven op de plank") is defined as the extent of adhesion of the cheeses on the wooden shelves onto which they lie during ripening. After lying on the shelf for 2 days (between day 13 and day 15 after production), the cheeses are lifted from the shelf. The lifting effort (or in the worst case, damage to the cheese coating if blocking causes some of the coating film to stick to the shelves) is a measure of blocking. | | | |

It is noted that even more favourable blistering scores, *i.e.* "excellent", were obtained when the wax concentrations in the coatings 1.1 and 1.2 were enhanced to 5% (wax solids by weight / coating solids by weight).

To further demonstrate the advantages of the invention, it was found that a coating composition comprising Mowilith 4230, with Pekophob C50 (ex Dick Peters) added in concentrations of 1% or 2%, had a significantly improved blocking resistance according to ASTM D4946-89(2003), as compared with a coating composition not containing the wax emulsion Pekophob C50.

In these experiments, the solid matter content of the coating compositions was adjusted to between 40 and 42% (according to ISO 1625) and the pH (at room temperature) of the coating composition was set between 4 and 6.

Clearly, the invention demonstrates a well improved adhesion of hydrocarbon-based protective layers to cheeses coated with compositions containing the additives according to the present invention.

## Claims

1. A water-borne cheese coating composition for reducing blistering of a protective layer comprising
- a water-borne polymer dispersion, and/or a water-borne film-forming component which comprises biopolymers, and
- a wax additive, wherein the wax additive comprises wax particles which are solid at room temperature,
wherein the concentration of the wax additive ranges between 0.1 and 5%, based on dry matter and wherein the cheese coating composition comprises a colourant.

2. The water-borne cheese coating composition according to claim 1 comprising the wax additive in an amount of 0.1-1.5% by weight based on dry matter.

3. The composition according to one of the preceding claims, in which the melting point of the wax employed for preparing the wax additive is 125 °C or less.

4. The composition according to one of the preceding claims, in which the wax additive comprises wax emulsions.

5. The composition according to claim 4 in which the wax emulsion comprises a self-emulsifying wax.

6. The composition according to any of the preceding claims in which the wax additive essentially contains food grade types of waxes, preferably selected from the group consisting of montan wax and carnauba wax.

7. The composition according to any of the preceding claims in which the water-borne polymer dispersion comprises homo- and/or copolymers of vinyl acetate.

8. The composition according to one of claims 1-7 in which the biopolymers are selected from the group consisting of poly(hydroxyalkanoate)s, caseinates, whey proteins, soy proteins and cellulose ethers.

9. Use of a water-borne cheese coating composition comprising
- a water-borne polymer dispersion, and/or a water-borne film-forming component which comprises biopolymers, and
- a wax additive, wherein the wax additive comprises wax particles which are solid at room temperature,
for reducing blistering of a protective layer.

10. Cheese provided with a coating according to one of claims 1-8.

11. Cheese according to claim 10, wherein the coated cheese is provided with a protective layer.

12. A method for preparing a cheese with a coating for reducing blistering of a protective layer, in which a coating composition according to any of claims 1-8 is applied onto said cheese.

13. The method according to claim 12, further comprising the step of applying a protective layer onto said coated cheese.

## Patentansprüche

1. Wasserbasierte Käsebeschichtungszusammensetzung zur Reduzierung der Blasenbildung einer Schutzschicht, mit
- einer wasserbasierten Polymerdispersion und/oder einer wasserbasierten schichtbildenden Komponente, die Bio-Polymere enthält, und
- einem Wachsadditiv, wobei das Wachsadditiv Wachsteilchen enthält, die bei Raumtemperatur fest sind,
wobei die Konzentration des Wachsadditivs im Bereich von 0,1 bis 5 % bezogen auf die Trockenmasse liegt, und wobei die Käsebeschichtungszusammensetzung ein Farbmittel aufweist.

2. Wasserbasierte Käsebeschichtungszusammensetzung nach Anspruch 1, die ein Wachsadditiv mit einem Anteil von 0,1 -1,5 Gew.-% bezogen auf die Trockenmasse enthält.

3. Zusammensetzung nach einem der vorhergehenden Ansprüche, wobei der Schmelzpunkt des zur Herstellung des Wachsadditivs verwendeten Wachs bei 125 °C oder weniger liegt.

4. Zusammensetzung nach einem der vorhergehenden Ansprüche, wobei das Wachsadditiv Wachsemulsionen umfasst.

5. Zusammensetzung nach Anspruch 4, wobei die Wachsemulsion ein selbst emulgierendes Wachs umfasst.

6. Zusammensetzung nach einem der vorhergehenden Ansprüche, wobei das Wachsadditiv im Wesentlichen für Nahrungsmittel geeignete Wachsen enthält, die vorzugsweise aus der Gruppe aus Montanwachs und Carnaubawachs ausgewählt sind.

7. Zusammensetzung nach einem der vorhergehenden Ansprüche, wobei die wasserbasierte Polymerdispersion Homo- und/oder Co-Polymere aus Vinylacetat aufweist.

8. Zusammensetzung nach einem der Ansprüche 1 - 7, wobei die Bio-Polymere ausgewählt sind aus der Gruppe Poly(hydroxyalkanoat)en, Caseine, Molkeproteine, Sojaproteine und Celluloseether.

9. Verwendung einer wasserbasierten Käsebeschichtungszusammensetzung, mit
- einer wasserbasierten Polymerdispersion und/oder einer wasserbasierten schichtbildenden Komponente, die Bio-Polymere aufweist, und
- einem Wachsadditiv, wobei das Wachsadditiv Wachsteilchen enthält, die bei Raumtemperatur fest sind,
zur Reduzierung der Blasenbildung einer Schutzschicht.

10. Käse, der mit einer Beschichtungszusammensetzung nach einem der Ansprüche 1 - 8 versehen ist.

11. Käse nach Anspruch 10, wobei der beschichtete Käse mit einer Schutzschicht versehen ist.

12. Verfahren zur Präparierung eines Käses mit einer Beschichtung zur Reduzierung einer Blasenbildung einer Schutzschicht, wobei eine Beschichtungszusammensetzung nach einem der Ansprüche 1 - 8 auf dem Käse aufgebracht wird.

13. Verfahren nach Anspruch 12, das ferner umfasst: Aufbringen einer Schutzschicht auf den beschichteten Käse.

## Revendications

1. Composition d'enrobage de fromage à l'eau pour réduire le cloquage d'une couche protectrice comprenant
- une dispersion de polymère à l'eau et/ou d'un composant filmogène à l'eau qui comprend des biopolymères, et
- un additif de cire, dans laquelle l'additif de cire comprend des particules de cire qui sont solides à température ambiante ;
dans laquelle la concentration de l'additif de cire se situe entre 0,1 et 5 % sur la base de la matière sèche, et dans laquelle la composition d'enrobage de fromage comprend un colorant.

2. Composition d'enrobage de fromage à l'eau selon la revendication 1, comprenant l'additif de cire en une quantité de 0,1 à 1,5 % en poids sur la base de la matière sèche.

3. Composition selon l'une quelconque des revendications précédentes, dans laquelle le point de fusion de la cire utilisée pour préparer l'additif de cire est de 125 °C ou moins.

4. Composition selon l'une quelconque des revendications précédentes, dans laquelle l'additif de cire comprend des émulsions de cire.

5. Composition selon la revendication 4, dans laquelle l'émulsion de cire comprend une cire auto-émulsifiante.

6. Composition selon l'une quelconque des revendications précédentes, dans laquelle l'additif de cire contient essentiellement des types de cires de qualité alimentaire, choisis de préférence dans le groupe constitué par la cire de Montan et la cire de Carnauba.

7. Composition selon l'une quelconque des revendications précédentes, dans laquelle la dispersion de polymère à l'eau comprend des homo- et/ou des copolymères d'acétate de vinyle.

8. Composition selon l'une quelconque des revendications 1 à 7, dans laquelle les biopolymères sont choisis dans le groupe constitué par les poly(hydroxyalcanoates), les caséinates, les protéines de lactosérum, les protéines de soja et les éthers de cellulose.

9. Utilisation d'une composition d'enrobage de fromage à l'eau comprenant
- une dispersion de polymère à l'eau et/ou d'un composant filmogène à l'eau comprenant des biopolymères, et
- un additif de cire, dans laquelle l'additif de cire comprend des particules de cire qui sont solides à la température ambiante,
pour réduire le cloquage d'une couche protectrice.

10. Fromage pourvu d'un enrobage selon l'une quelconque des revendications 1 à 8.

11. Fromage selon la revendication 10, dans lequel le fromage enrobé est pourvu d'une couche protectrice.

12. Procédé de préparation d'un fromage avec un enrobage pour réduire les cloques d'une couche protectrice, dans lequel une composition d'enrobage selon l'une quelconque des revendications 1 à 8 est appliquée sur ledit fromage.

13. Procédé selon la revendication 12, comprenant en outre l'étape consistant à appliquer une couche protectrice sur ledit fromage enrobé.
